# EUROPÄISCHE PATENTANMELDUNG

(11) **EP 1 134 114 A2**
(43) Veröffentlichungstag der Anmeldung: **19.09.2001**
(21) Anmeldenummer: 01105525.8
(22) Anmeldetag: 06.03.2001
(51) Int. Cl.: B60N 2/48

(54) **Kopfstütze für einen Fahrzeugsitz**

(30) Priorität: 16.03.2000 DE 10012973
(71) Anmelder: DaimlerChrysler AG, 70567 Stuttgart (DE)
(72) Erfinder: Dinkel, Emil, 71272 Renningen (DE); Orizaris, Vasilios, 71272 Renningen (DE); Schrader, Jürgen, 71093 Weil im Schönbuch (DE)

(57) **Zusammenfassung**

Die Erfindung betrifft eine Kopfstütze für einen Fahrzeugsitz mit einem in die Rückenlehne höhenverschiebbar einsteckbaren Halteelement, einem daran angeordneten Polsterträger und einem von diesem gehaltenen Kopfpolster zur Kopfabstützung sowie mit einer zwischen Halteelement und Polsterträger angeordneten Schwenkvorrichtung zur Neigungseinstellung des Kopfpolsters um eine quer zur Sitztiefe ausgerichtete Drehachse. Zur Schaffung einer Kopfstütze, die eine körpergerechte Form aufweist und in Höhe und Neigung so einstellbar ist, daß sie in jeder Position die Rückenkontur des Sitzenden fortbildet, weist das Kopfpolster eine nach unten über den Polsterträger hinaus vorgezogene Polsterzunge zur Nackenabstützung auf und ist die Kontur der Vorderfläche von Kopfpolster und Polsterzunge dem Verlauf von Hinterkopf und Nacken nachgeformt. Die Schwenkvorrichtung ist so ausgebildet, daß die Drehachse des Kopfpolsters außerhalb der Kopfstützenstruktur und in allen möglichen Höheneinstellungen der Kopfstütze immer auf dem Lehnenspiegel liegt.

## Beschreibung

Die Erfindung betrifft eine Kopfstütze für einen Sitzkissen und Rückenlehne aufweisenden Fahrzeugsitz gemäß dem Oberbegriff des Patentanspruchs 1.

Bei einer bekannten Kopfstütze dieser Art (DE 43 05 909 C2) weist das Halteelement einen abgekröpften, U-förmigen Tragbügel auf, der mit seinen Schenkeln in zwei in der Rückenlehne integrierten Führungshülsen höhenverstellbar aufgenommen ist und an seinem die Schenkel verbindenden Quersteg ein Drehelement der Schwenkvorrichtung trägt. Das Drehelement sitzt axial verschieblich auf dem als U-förmiger Bügel ausgeführten Polsterträger, so daß das Kopfpolster sowohl in der Horizontalen verschoben als auch in jeder horizontalen Verschiebestellung um eine durch den Quersteg des Tragbügels verlaufende Schwenkachse kippbar ist. Somit läßt sich das Kopfpolster durch Höheneinstellung des Tragbügels an die Körpergröße des Sitzbenutzers anpassen und durch Horizontalverschieben und Neigungseinstellung an den Kopf des Sitzenden heranführen.

Zur Kopfabstützung von Sitzbenutzern mit extrem unterschiedlicher Körpergröße muß ein großer Bereich der Höhenversteilbarkeit der Kopfstütze vorgehalten werden. Das bedeutet, daß einerseits die Kopfstütze unterseitig unmittelbar auf der Lehnenoberkante aufliegt und andererseits einen mehr oder weniger großen Abstand von der Lehnenoberkante hat. Im letzteren Fall ist die kontinuierliche Abstützung des Oberkörpers des Sitzenden, d.h. Schulter-, Nacken- und Kopfabstützung, nicht gegeben. Diese Unterbrechung der kontinuierlichen Körperabstützung kann einerseits zu Verspannungen der Rücken- bzw. Nackenmuskulatur bei längeren Fahrten führen, andererseits bietet die Kopfstütze durch leicht mögliches Falscheinstellen der Höhenlage nicht immer den optimalen Schutz bei einem Crashfall. Viele Kopfstützen werden oft so eingestellt, daß sie zwar eine gute Nackenabstützung bieten, was aber zu einer zu niedrig eingestellten Kopfstütze führt, die im Crashfall die Gefahr eines Genickbruches steigert. Bei richtig eingestellter Kopfstützenhöhe bietet hingegen das Kopfpolster keine Nackenabstützung.

Der Erfindung liegt die Aufgabe zugrunde, eine Kopfstütze der eingangs genannten Art zu schaffen, die eine körpergerechte Form aufweist und in Höhe und Neigung so einstellbar ist, daß sie in jeder Position die Rückenkontur des Sitzenden in den Nacken- und Hinterkopfbereich hinein fortbildet.

Die Aufgabe ist erfindungsgemäß durch die Merkmale des Patentanspruchs 1 gelöst.

Die erfindungsgemäße Kopfstütze hat den Vorteil, daß sie in Höhe und Neigung immer so einstellbar ist, daß sie immer eine kontinuierliche Abstützung des Oberkörpers im Schulter-, Nacken- und Kopfbereich realisiert. Größtmögliche Sicherheit und größtmöglicher Komfort gehen dabei Hand in Hand, d.h., die Kopfstütze bietet dann die größte Sicherheit, wenn sie für den Sitzenden komfortabel eingestellt ist. Eine Fehleinstellung wird auf ein Minimum reduziert; denn eine zu niedrig eingestellte Kopfstütze drückt am Rücken und signalisiert dem Sitzenden die Notwendigkeit, die Kopfstütze höher einzustellen. Durch die Ausbildung der Schwenkvorrichtung derart, daß die imaginäre oder fiktive Drehachse beim Schwenken des Kopfpolsters immer auf dem Lehnenspiegel liegt, ist die bestmögliche Unterstützung der Nackenmuskulatur gewährleistet. Bei einem Crashfall (Heck- oder Frontalaufprall) bietet die erfindungsgemäße Kopfstütze eine gute Unterstützung, da die Aufprallfläche sich ganz nah am Hinterkopf befindet und durch die Arretierung die Aufprallkräfte direkt über das Halteelement an die Lehnenstruktur weitergeleitet werden.

Vorteilhafte Ausführungsformen der erfindungsgemäßen Kopfstütze mit zweckmäßigen Weiterbildungen und Ausgestaltungen der Erfindung sind in den weiteren Patentansprüchen angegeben.

Die um die Schwenkachse des Kopfpolsters, die außerhalb der Struktur der Kopfstütze, und zwar immer im Bereich des Lehnenspiegels liegt, erfolgende Schwenkbewegung des Kopfpolsters kann manuell oder elektrisch ausgeführt werden, wobei die längs konzentrischer Kreise um die Drehachse erfolgende Bewegung des Kopfpolsters in der Schwenkvorrichtung mit Getriebe und Übersetzung oder mit Gelenkmechanik und Kulissenführung realisierbar ist. Das Kopfpolster ist dabei in jeder Position arretierbar. Bei motorischer Kopfpolsterschwenkung kann die Kopfstützenposition über Kennfeldsteuerung automatisch voreingestellt werden, wobei sämtliche Sitzeinstellpositionen berücksichtigt werden. Eine automatische Kopfstützenpositionierung kann auch mittels Insassen-Positionserfassung erfolgen. Die voreingestellte Position kann jederzeit vom Insassen korrigiert werden.

Die Erfindung ist anhand von in der Zeichnung dargestellten Ausführungsbeispielen im folgenden näher beschrieben. Es zeigen:
- Fig. 1: ausschnittweise eine Seitenansicht eines Fahrzeugsitzes mit einer in zwei extremen Höheneinstellungen, und zwar für den 95%-Mann in Fig. 1A und für die 5%-Frau in Fig. 1B, verbrachten Kopfstütze, jeweils schematisiert dargestellt,
- Fig. 2: eine gleiche Darstellung wie in Fig. 1 mit modifiziertem Kopfpolster der Kopfstütze,
- Fig. 3: eine perspektivische Rückansicht der Kopfstütze in Fig. 1 ohne Kopfpolster,
- Fig. 4: eine schematisierte Seitenansicht der Kopfstütze in Fig. 3 mit Kopfpolster,
- Fig. 5: eine perspektivische Rückansicht der Kopfstütze in Fig. 2 ohne Kopfpolster,
- Fig. 6: eine schematisierte Seitenansicht der Kopfstütze in Fig. 5 mit Kopfpolster,
- Fig. 7: eine gleiche Darstellung wie in Fig. 3 einer Kopfstütze gemäß einem dritten Ausführungsbeispiel,
- Fig. 8: eine schematisierte Seitenansicht der Kopfstütze in Fig. 7,
- Fig. 9: eine gleiche Darstellung wie in Fig. 3 einer Kopfstütze gemäß einem vierten Ausführungsbeispiel,
- Fig. 10: eine schematisierte Seitenansicht der Kopfstütze in Fig. 9 mit Kopfpolster,
- Fig. 11: eine gleiche Darstellung wie in Fig. 3 einer Kopfstütze gemäß einem fünften Ausführungsbeispiel,
- Fig. 12: eine schematisierte Seitenansicht der Kopfstütze in Fig. 11 mit Kopfpolster,
- Fig. 13: eine gleiche Darstellung wie in Fig. 3 einer Kopfstütze gemäß einem sechsten Ausführungsbeispiel,
- Fig. 14: eine schematisierte Seitenansicht der Kopfstütze in Fig. 13 mit Kopfpolster.

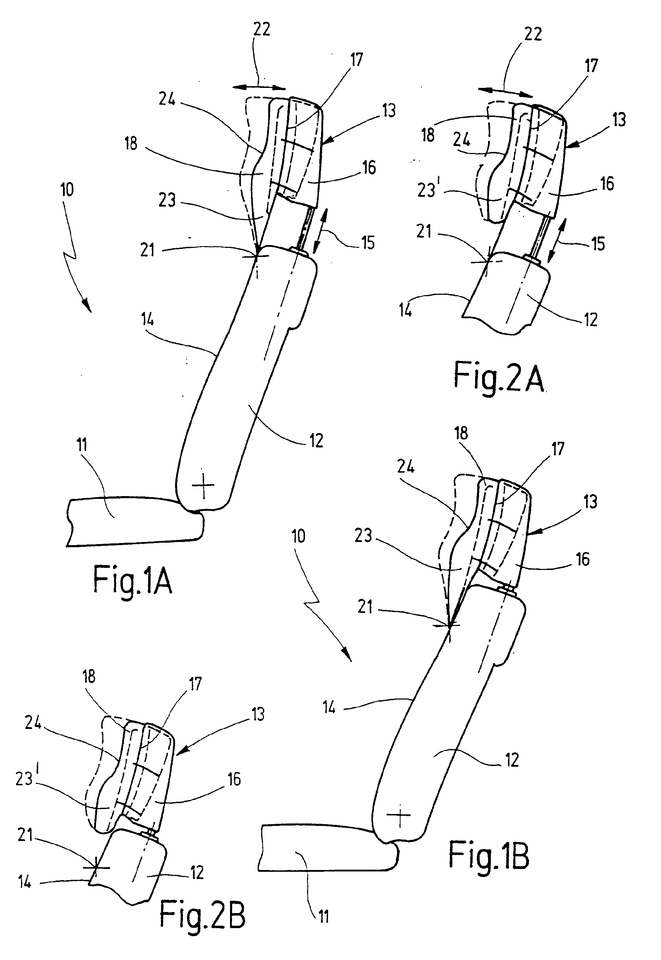

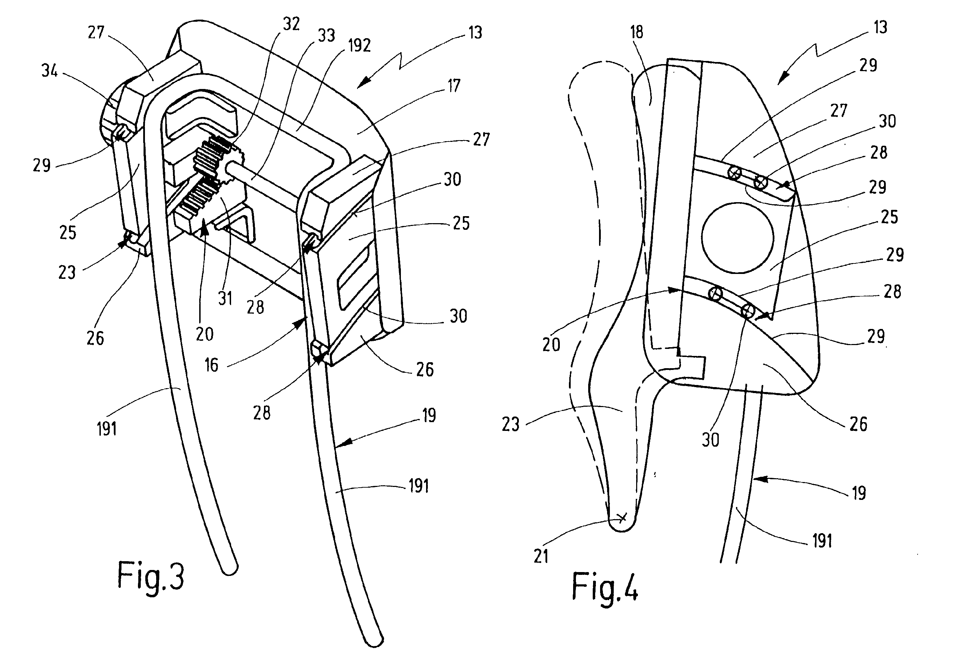

Der in Fig. 1 in Seitenansicht ausschnittweise dargestellte Fahrzeugsitz weist ein Sitzkissen 11, eine an dem Sitzkissen 11 schwenkbar gehaltene Rückenlehne 12, sowie eine in der Rückenlehne 12 höhenverstellbar gehaltene Kopfstütze 13 auf. Die einem Sitzenden zugekehrte Vorderfläche der Rückenlehne 12, der sog. Lehnenspiegel, ist mit 14 bezeichnet. Die Höhenverstellbarkeit der Kopfstütze 13 ist bekannt und in Fig. 1 durch Doppelpfeil 15 gekennzeichnet. Die in Fig. 1 nur schematisch angedeutete Kopfstütze 13 besteht aus einem Halteelement 16, einem am Halteelement 16 angeordneten Polsterträger 17 und einem am Polsterträger 17 gehaltenen Kopfpolster 18 zur Kopfabstützung des Sitzenden. Wie besser in Fig. 3 und 4 zu sehen ist, weist das Halteelement 16 einen U-förmigen Tragbügel 19 auf, dessen beide Bügelschenkel in der Lehnenstruktur der Rückenlehne 12 höhenverstellbar geführt und in jeder Höhenposition verrastbat sind. Die Bügelschenkel 191 sind im oberen Bereich abgekröpft und über einen Quersteg 192 miteinander verbunden. Zwischen Halteelement 16 bzw. Tragbügel 19 und Polsterträger 17 ist eine Schwenkvorrichtung 20 angeordnet mittels der der Polsterträger 17 mit daran gehaltenem Kopfpolster 18 um eine quer zur Sitztiefe ausgerichtete Drehachse 21 geneigt und damit an den Kopf des Sitzenden herangeführt werden kann. Die Schwenkbarkeit des Kopfpolsters 18 ist Fig. 1 durch einen Doppelpfeil 22 symbolisiert. Die beiden Schwenkendstellungen des Kopfpolsters 18 sind ausgezogen bzw. strichliniert eingezeichnet. Zur Erzielung einer körpergerechten Form der Kopfstütze, die in Höhe und Neigung so einstellbar ist, daß sie in jeder Position eine kontinuierliche Abstützung des Oberkörpers des Sitzenden, d.h. ein Schulter-, Nacken- und Kopfabstützung, gewährleistet, weist das Kopfpolster 18 eine mit ihm einstückige, nach unten über den Polsterträger 17 hinaus vorgezogene Polsterzunge 23 zur Nackenabstützung auf und die Kontur der Vorderfläche 24 von Kopfpolster 18 und Polsterzunge 23 ist dem Verlauf von Hinterkopf und Nacken nachgeformt. Außerdem ist die Schwenkvorrichtung 20 so ausgebildet, daß die Drehachse 21, um die das Kopfpolster 18 mit Polsterzunge 23 schwenkt, außerhalb der Kopfstützenstruktur liegt, und zwar in allen möglichen Höheneinstellungen der Kopfstütze 13 bzw. des Halteelements 16 bzw. des Tragbügels 19 immer auf dem Lehnenspiegel 14.

Bei dem Ausführungsbeispiel der Kopfstütze 13 in Fig. 1 ist die Polsterzuge 23 soweit nach unten vorgezogen, daß sie bei für den 95%-Mann maximal hochgefahrener Kopfstütze 13 (Fig. 1A) gerade noch bis zur Oberkante der Rückenlehne 12 reicht. Bei der niedrigsten Einstellung der Kopfstütze 13 für die 5%-Frau (Fig. 1B) schiebt sich dann die Polsterzunge 23 maximal über den Lehnenspiegel 14. In beiden Fällen liegt die Drehachse 21 nach wie vor im Bereich des Lehnenspiegels 14.

Bei dem Ausführungsbeispiel der Kopfstütze 13 in Fig. 2 ist die Polsterzunge 23' verkürzt ausgeführt, so daß sie in der tiefsten Einstellung der Kopfstütze 13 für die 5%-Frau (Fig. 2B) bis an die Oberkante der Rückenlehne 12 reicht. In der maximalen Höheneinstellung der Kopfstütze 13 für den 95%-Mann (Fig. 2A) entsteht eine Lücke zwischen der Unterkante der Polsterzunge 23' und der Oberkante der Rückenlehne 12. Nach wie vor liegt aber die Drehachse 21 des Kopfpolsters 18 in beiden Extremstellungen auf dem Lehnenspiegel 14.

In Fig. 3 - 14 sind verschiedene Ausführungsvarianten der Schwenkvorrichtung 20 im einzelnen dargestellt. Jede der Schwenkvorrichtungen 20 bewirkt eine Verschiebung des Kopfpolsters 18 auf einem Kreisbogenabschnitt, der konzentrisch zur imaginären oder fiktiven Drehachse 21 am Lehnenspiegel 14 liegt.

In dem Ausführungsbeispiel der Fig. 3 und 4 weist die Schwenkvorrichtung 20 zwei im Querabstand voneinander angeordnete Verschiebeglieder 25 auf, die fest mit dem Halteelement 16 bzw. dem Tragbügel 19 verbunden sind. Oberhalb und unterhalb eines jeden Verschiebegliedes 25 ist ein unteres Verschiebeglied 26 und ein oberes Verschiebeglied 27 angeordnet. Die Verschiebeglieder 25 - 27 stützen sich über je eine Gleitführung 28 aufeinander ab. Die einander zugekehrten Gleitflächen 29 der Verschiebeglieder 25 - 27 sind Kreisbogenabschnitte, die konzentrisch zur Drehachse 21 liegen. Die Gleitführungen 28 weisen im Ausführungsbeispiel der Fig. 3 und 4 zwischen den Gleitflächen 29 eingelegte Gleitkörper 30 auf. Anstelle von Gleitkörpern 30 können auch Wälzkörper verwendet werden oder die Gleitführungen 28 als Schwalbenschwanzverbindungen ausgeführt werden, wobei die Gleitflächen 29 unmittelbar aufeinanderliegen. An dem Polsterträger 17 ist weiterhin ein Zahnkranzsegment 31 befestigt, das ebenfalls koaxial zur Drehachse 21 liegt. Mit dem Zahnkranzsegment 31 kämmt ein Zahnrad 32, das drehfest auf einer im Halteelement 16 drehbar aufgenommenen Zahnradwelle 33 sitzt. Auf der Zahnradwelle 33 sitzt außerdem drehfest ein Handrad 34, das außen am Halteelement 16 seitlich vorsteht. Wird das Handrad 34 in Fig. 3 im Uhrzeigersinn gedreht, so wälzt sich das Zahnrad 32 auf dem Zahnkranzsegment 31 ab und verschiebt dieses, wodurch der Polsterträger 17 mit Kopfpolster 18 in die in Fig. 4 strichliniert gezeichnete Position geschwenkt wird.

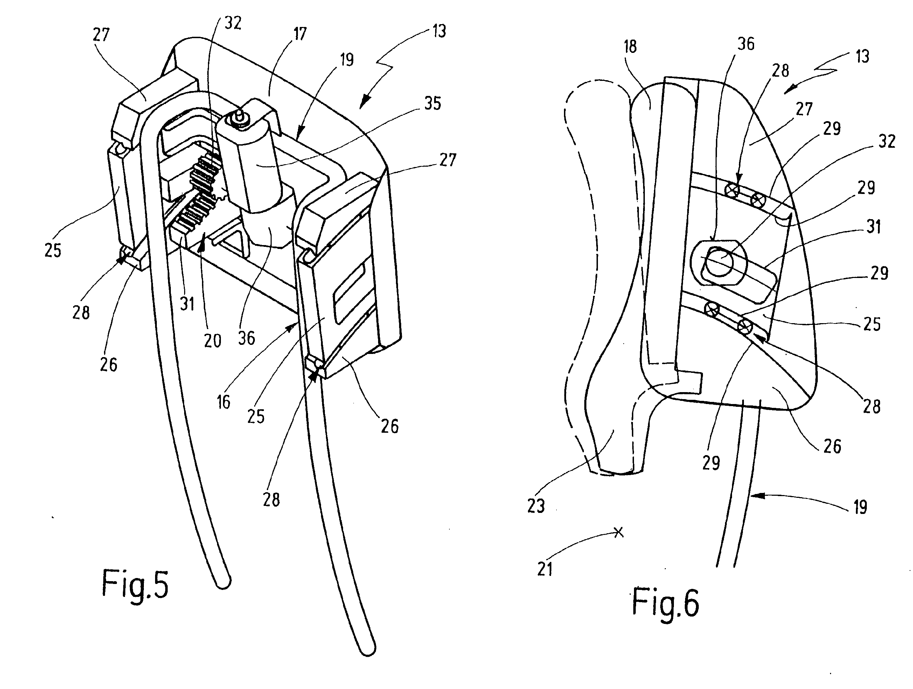

Die in Fig. 5 und 6 dargestellte Schwenkvorrichtung 20 stimmt mit der zu Fig. 3 und 4 beschriebenen Schwenkvorrichtung 20 vollständig überein mit dem Unterschied, daß die Zahnradwelle 33 nicht manuell mittels des Handrades, 34 sondern motorisch gedreht wird. Hierzu ist an dem Halteelement 16 ein Elektromotor 35 befestigt, der über ein Winkelgetriebe 36 die Zahnradwelle 33 dreht. Damit wird, in gleicher Weise wie vorstehend beschrieben, der Polsterträger 17 mit Kopfpolster 18 aus der in Fig. 6 ausgezogenen Darstellung in die in Fig. 6 strichliniert dargestellte Stellung überführt. Bei dem in Fig. 6 dargestellten Kopfpolster 18 ist noch insoweit eine Änderung vorgenommen, als die Polsterzunge 23', in Übereinstimmung mit der Kopfstütze gemäß Fig. 2, verkürzt ausgeführt ist, so daß die fiktive Drehachse 21, um die das Kopfpolster 18 gedreht wird, außerhalb der Polsterzunge 23' liegt, nach wie vor aber bei allen Höhenverstellungen der Kopfstütze 13 immer auf dem Lehnenspiegel 14.

Bei beiden in Fig. 3 und 4 einerseits und Fig. 5 und 6 andererseits dargestellten Schwenkvorrichtungen 20 kann die Festlegung der Verschiebeglieder 25 einerseits und der Verschiebeglieder 26, 27 andererseits am Halteelement 16 und Polsterträger 17 vertauscht werden.

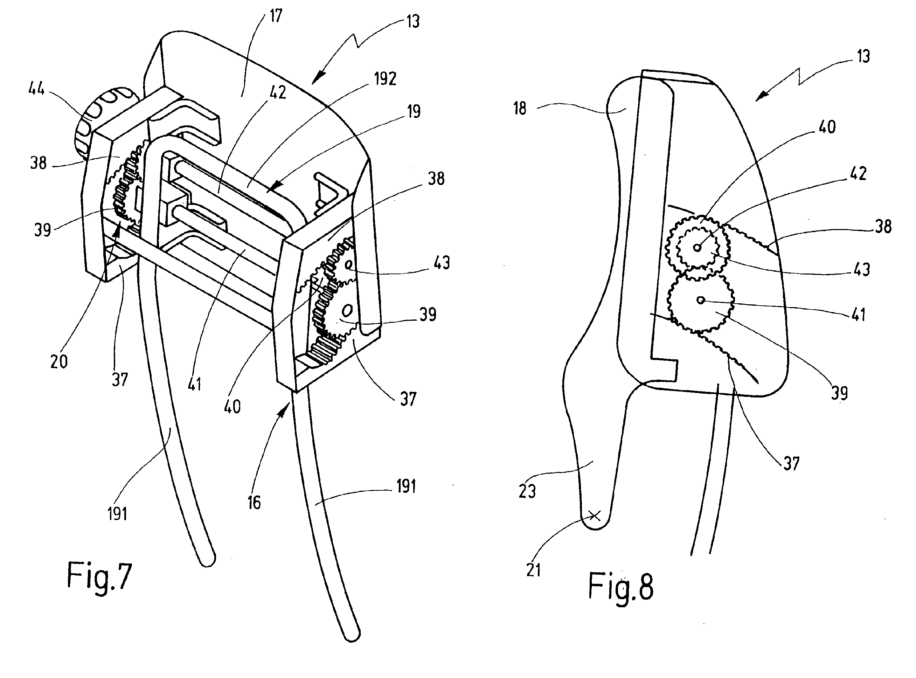

Bei dem Ausführungsbeispiel der Kopfstütze 13 in Fig. 7 und 8 weist die Schwenkvorrichtung 20 zwei Paare von konzentrisch zur Drehachse 21 angeordneten, voneinander radial beabstandeten Zahnsegmenten 37, 38, deren Zahnreihen einander zugekehrt sind, sowie zwei Paare von jeweils mit einem der Zahnsegmente 37, 38 kämmenden Zahnrädern 39, 40 auf. Die insgesamt vier Zahnsegmente 37 und 38 sind an dem Polsterträger 17 befestigt, während die insgesamt vier Zahnräder 39 und 40 drehbar im Halteelement 16 gelagert sind. Dabei sitzen die beiden mit den Zahnsegmenten 37 kämmenden Zahnräder 39 und die beiden mit den Zahnsegmenten 38 kämmenden Zahnräder 40 jeweils auf einer gemeinsamen Zahnradwelle 41 bzw. 42. Auf der Zahnradwelle 42 sitzt außerdem noch ein Antriebszahnrad 43 sowie ein Handrad 44. Das Antriebsrad 43 kämmt mit dem Zahnrad 39, so daß bei Drehen der Zahnradwelle 42 mittels des Handrades 44 das obere Zahnrad 40 von der Zahnradwelle 41 und das untere Zahnrad 39 von dem Antriebsrad 43 gedreht wird. Beim Drehen der beiden Zahnräder 39, 40 werden die Zahnsegmente 37, 38 um die Drehachse 21 verschwenkt wodurch sich der Polsterträger 17 mit dem Kopfpolster 18 in gleicher Richtung verschiebt.

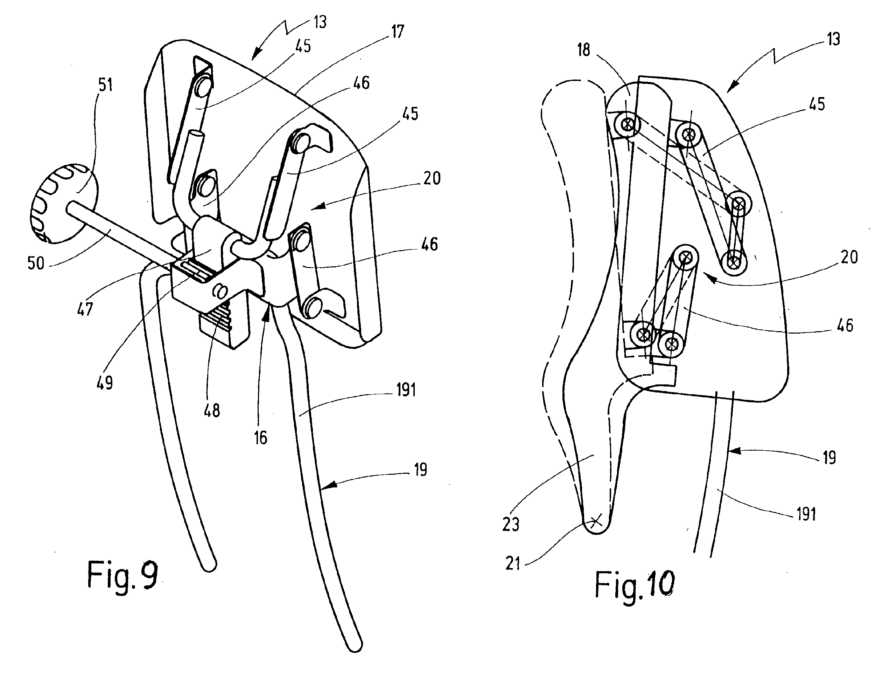

In dem Ausführungsbeispiel der Kopfstütze 13 nach Fig. 9 und 10 wird das Schwenken des Kopfpolsters 18 um die imaginäre Drehachse 21 mittels Schwenkhebeln realisiert, die einerseits am Polsterträger 17 und andererseits am Halteelement 16 angelenkt sind. Die Schwenkvorrichtung 20 weist ein Paar oberer Schwenkhebel 45 und ein Paar unterer Schwenkhebel 46 auf, die im Querabstand voneinander angeordnet sind. Beide Schwenkhebelpaare 45, 46 sind an dem Polsterträger 17 angelenkt. Das untere Schwenkhebelpaar 46 ist zusätzlich an dem Halteelement 16 und das obere Schwenkhebelpaar 45 an einem im Halteelement 16 vertikal verschieblichen Hebelschwenkglied 47 angelenkt. Das Hebelschwenkglied 47 weist eine Verzahnung 48 auf und kämmt mit einem Antriebsritzel 49, das zusammen mit einem Handrad 51 auf einer Ritzelwelle 50 sitzt, die im Halteelement 16 drehbar aufgenommen ist. Wird das Handrad 51 in Fig. 9 im Uhrzeigersinn gedreht, so wird das Hebelschwenkglied 47 vertikal nach oben verschoben, wodurch der Polsterträger 17 mit Kopfpolster 18 über die Schwenkhebelanordnung in die in Fig. 10 strichliniert dargestellte Stellung vorschwenkt.

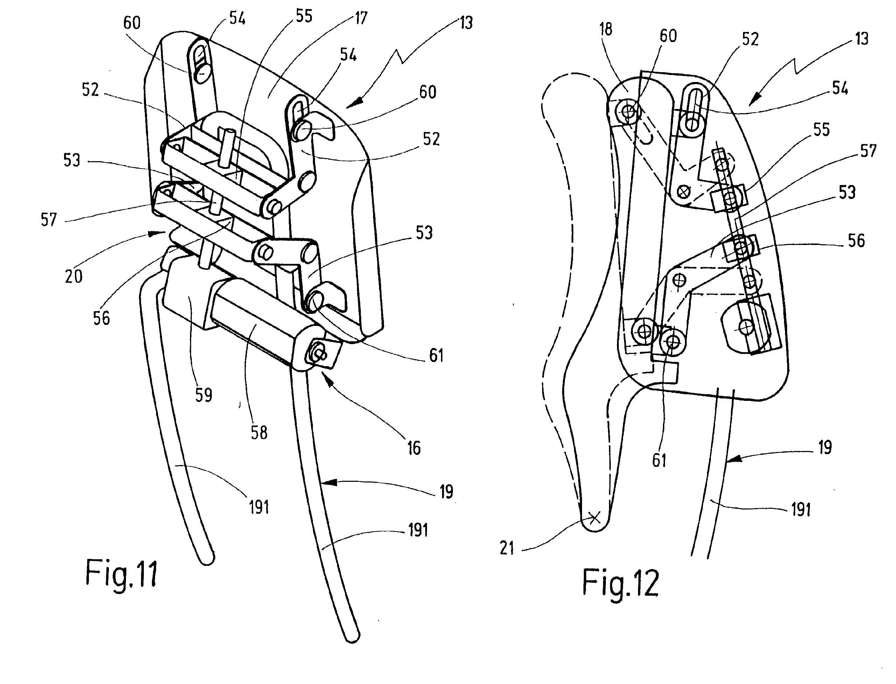

Die im Ausführungsbeispiel der Kopfstütze 13 in Fig. 11 und Fig. 12 zwischen Halteelement 16 und Polsterträger 17 angeordnete Schwenkvorrichtung 20 weist wiederum zwei im Querabstand voneinander angeordnete Paare von Schwenkhebeln auf, die hier als Winkelhebel 52, 53 ausgebildet sind. Die insgesamt vier Winkelhebel 52, 53 sind mit ihrem einen Ende am Polsterträger 17 angelenkt, wobei die Anlenkung der oberen Winkelhebel 52 über je eine Langlochführung 54 erfolgt. Die anderen Enden der Winkelhebel 52, 53 sind jeweils an einer Gewindemuffe 55 bzw. 56 angelenkt, die auf einer Gewindespindel 57 verschraubbar sind. Die Gewindespindel 57 ist am Halteelement 16 drehbar aufgenommen und wird von einem Elektromotor 58 über ein Getriebe 59 in Drehung versetzt. Die Gewindespindel 57 weist zwei Gewindeabschnitte mit entgegengesetzten Steigungen auf, wobei jeweils eine Gewindemuffe 55 bzw. 56 in einem der Gewindeabschnitte verschraubbar ist. Befindet sich das Kopfpolster 18 in seiner hinteren Endstellung, wie dies in Fig. 12 ausgezogen dargestellt ist, und wird nunmehr der Elektromotor 58 eingeschaltet, so wird die Gewindespindel 57 gedreht, und die beiden Gewindemuffen 55, 56 verschrauben sich auf der Gewindespindel 57 in der Weise, daß sich der Abstand zwischen den Gewindemuffen 55, 56 vergrößert. Dabei wird der Polsterträger 17 nach vorn geschwenkt, wobei sich die Anlenkpunkte 60 und 61 am Polsterträger 17 jeweils auf einer zur Drehachse 21 konzentrischen Kreisbahn verschieben. Die maximale Schwenkendstellung ist in Fig. 12 strichliniert eingezeichnet.

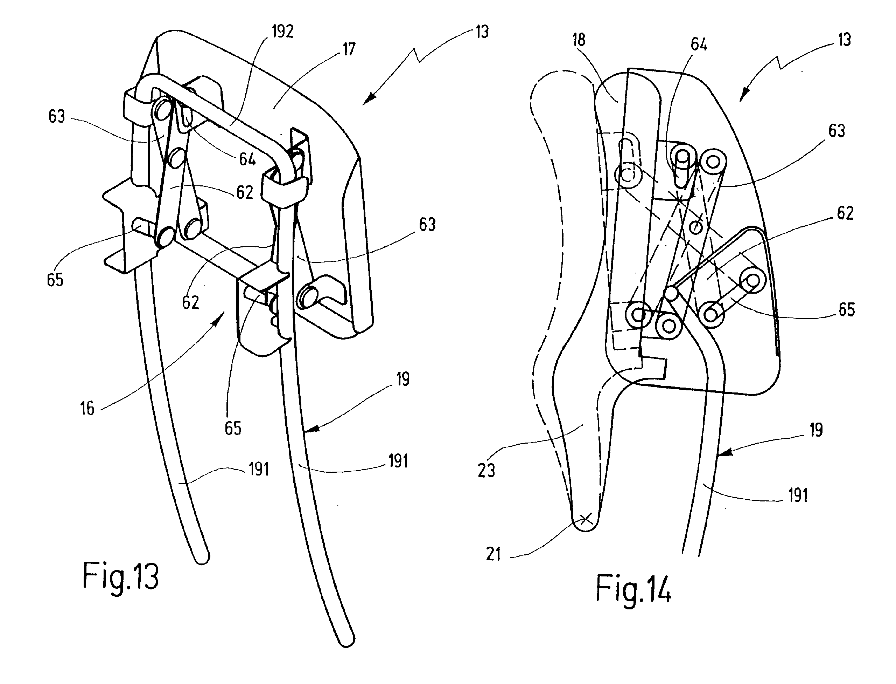

Die im Ausführungsbeispiel der Kopfstütze 13 gemäß Fig. 13 und 14 zu sehende Schwenkvorrichtung 20 weist zwei Paare scherenartig miteinander drehbar verbundener Hebel 62, 63 auf. Die Hebel 62 sind an ihren einem Hebelende an dem Polsterträger 17 und mit ihrem anderen Hebelende an dem Halteelement 16 angelenkt. Die Hebel 63 sind mit je einem Hebelende über eine Kulissenführung 64 bzw. 65 mit dem Polsterträger 17 bzw. dem Halteelement 16 verbunden. Wird das in seiner hinteren End-Schwenkstellung stehende Kopfpolster 18 von Hand gegriffen und nach vorn gezogen, so bewegt es sich durch die Hebelkinematik mit Kulissenführungen 64, 65 um die imaginäre Schwenkachse 21 in die in Fig. 14 strichliniert dargestelle Position. Durch die Schwergängigkeit der Hebelkinematik wird die eingestellte Neigungsposition des Kopfpolsters 18 in jeder Schwenkstellung gehalten.

## Patentansprüche

1. Kopfstütze für einen Sitzkissen (11) und Rückenlehne (12) aufweisenden Fahrzeugsitz (10) mit einem in die Rückenlehnen (12) höhenverschiebbar und verrastbar einsteckbaren Halteelement (16) mit einem am Halteelement (16) angeordneten Polsterträger (17), mit einem am Polsterträger (17) gehaltenen Kopfpolster (18) zur Kopfabstützung und mit einer zwischen Halteelement (16) und Polsterträger (17) angeordneten Schwenkvorrichtung (20) zur Neigung des Kopfpolsters (18) um eine quer zur Sitztiefe ausgerichtete Drehachse (21),
**dadurch gekennzeichnet,**
**daß** das Kopfpolster (18) eine mit ihm einstückige, nach unten über den Polsterträger (17) hinaus vorgezogene Polsterzunge (23; 23') zur Nackenabstützung aufweist und die Kontur der Vorderfläche von Kopfpolster (18) und Polsterzunge (23; 23') dem Verlauf von Hinterkopf und Nacken nachgeformt ist und daß die Schwenkvorrichtung (20) so ausgebildet ist, daß die Drehachse (21) des Kopfpolsters (18) außerhalb der Kopfstützenstruktur und in allen möglichen Höheneinstellungen der Kopfstütze immer auf der dem Sitzenden zugekehrten Vorderfläche (Lehnenspiegel 14) der Rückenlehne (12) liegt.

2. Kopfstütze nach Anspruch 1,
**dadurch gekennzeichnet,**
**daß** die Schwenkvorrichtung (20) mindestens ein Paar, vorzugsweise zwei im Querabstand voneinander angeordnete Paare, längs eines zur Drehachse (21) konzentrischen Kreisbogenabschnitts relativ zueinander verschiebbarer Verschiebeglieder (25, 26) aufweist, von denen eines an dem Halteelement (16) und eines an dem Polsterträger (17) befestigt ist.

3. Kopfstütze nach Anspruch 2,
**dadurch gekennzeichnet,**
**daß** die Verschiebeglieder (25, 26) auf einander zugekehrten Seiten kreisbogenabschnittförmige Gleitflächen (29) aufweisen, die konzentrisch zur Drehachse (21) angeordnet sind und sich unmittelbar oder über Wälz- oder Gleitkörper (30) aufeinander abstützen.

4. Kopfstütze nach Anspruch 3,
**dadurch gekennzeichnet,**
**daß** eines der Verschiebeglieder (25) sich auf der von dem anderen Verschiebeglied (26) abgekehrten Seite mit einer weiteren, konzentrisch zur Drehachse (21) angeordneten Gleitfläche (29) auf einer gleich ausgebildeten Gleitfläche (29) eines weiteren Verschiebeglieds (27) direkt oder über Wälz- oder Gleitkörper (30) abstützt und daß das weitere Verschiebeglied (27) mit dem anderen Verschiebeglied (26) über den Polsterträger (17) oder das Halteelement (16) fest verbunden ist.

5. Kopfstütze nach einem der Ansprüche 2 - 4,
**dadurch gekennzeichnet,**
**daß** zur Relativverschiebung der Verschiebeglieder (25 - 27) an einem Verschiebeglied (26) ein zur Drehachse (21) konzentrisches Zahnkranzsegment (31) und am anderen Verschiebeglied (25) ein mit dem Zahnkranzsegment (31) kämmendes Zahnrad (32) mit seiner Zahnradwelle (33) festgelegt ist und daß die Zahnradwelle (33) mittels eines Handrads (34) oder eines Elektromotors (35) antreibbar ist.

6. Kopfstütze nach Anspruch 1,
**dadurch gekennzeichnet,**
**daß** die Schwenkvorrichtung (20) mindestens ein konzentrisch zur Drehachse (21) angeordnetes Zahnkranzsegment (37) und ein mit diesem kämmendes Zahnrad (39) aufweist, von denen eines an dem Polsterträger (17) und eines an dem Halteelement (16) befestigt ist, und daß das mindestens eine Zahnrad (39) mittels eines Handrads (44) oder eines Elektromotors antreibbar ist.

7. Kopfstütze nach Anspruch 1,
**dadurch gekennzeichnet,**
**daß** die Schwenkvorrichtung (20) mindestens ein Paar konzentrisch zur Drehachse (21) im Radialabstand voneinander angeordneter Zahnkranzsegmente (37, 38), deren Zahnreihen einander zugekehrt sind, und mindestens ein Paar jeweils mit einem der Zahnkranzsegmente (37, 38) kämmender, jeweils auf einer Zahnradwelle (41, 42) sitzender Zahnräder (39, 40) aufweist, von denen ein Paar Zahnkranzsegmente (37, 38) an dem Polsterträger (17) und ein Paar Zahnräder (39, 40) mit ihren Zahnradwellen (41, 42) an dem Halteelement (16) oder umgekehrt festgelegt ist, daß auf der Zahnradwelle (42) des einen Zahnrads (40) ein mit dem anderen Zahnrad (39) kämmendes Antriebszahnrad (43) drehfest angeordnet ist und daß die das Antriebsrad (43) tragende Zahnradwelle (42) mittels eines Handrads (44) oder eines Elektromotors antreibbar ist.

8. Kopfstütze nach Anspruch 6 oder 7,
**dadurch gekennzeichnet,**
**daß** die Zahnsegmente (37, 38) und die Zahnräder (39, 40) jeweils doppelt vorhanden sind und im Querabstand voneinander angeordnet sind.

9. Kopfstütze nach Anspruch 1,
**dadurch gekennzeichnet,**
**daß** die Schwenkvorrichtung (20) mindestens einen oberen und mindestens einen unteren Schwenkhebel (45, 46; 52, 53) aufweist, die jeweils endseitig am Halteelement (16) und Polsterträger (17) angelenkt sind, und daß mindestens ein Hebel (45; 52, 53) manuell oder motorisch schwenkbar ist.

10. Kopfstütze nach Anspruch 9,
**dadurch gekennzeichnet,**
**daß** der mindestens eine obere Hebel (45) an einem am Halteelement (16) vertikal verschieblichen Hebelschwenkglied (47) angelenkt ist, das manuell oder motorisch verschiebbar ist.

11. Kopfstütze nach Anspruch 10,
**dadurch gekennzeichnet,**
**daß** das Hebelschwenkglied (47) eine Verzahnung (48) aufweist und am Halteelement (16) ein mit der Verzahnung (48) kämmendes Antriebsritzel (49) mit seiner Ritzelwelle (50) drehbar festgelegt ist und daß die Ritzelwelle (50) mittels eines Handrads (51) oder eines Elektromotors antreibbar ist.

12. Kopfstütze nach Anspruch 9,
**dadurch gekennzeichnet,**
**daß** die halteelementseitige Anlenkung der Schwenkhebel (52, 53) an jeweils einer Gewindemuffe (55, 56) vorgenommen ist, daß die Gewindemuffen (55, 56) auf einer am Halteelement (16) festgelegten Gewindespindel (57) auf Gewindeabschnitten mit gegenläufigen Gewindesteigungen verschraubbar sind und daß die Gewindespindel (57) mittels eines Elektromotors (58) oder manuell antreibbar ist.

13. Kopfstütze nach Anspruch 12,
**dadurch gekennzeichnet,**
**daß** die Anlenkung des mindestens einen oberen Hebels (52) über eine Langlochführung (54) vorgenommen ist.

14. Kopfstütze nach Anspruch 12 oder 13,
**dadurch gekennzeichnet,**
**daß** die Schwenkhebel als Winkelhebel (52, 53) ausgebildet sind.

15. Kopfstütze nach einem der Ansprüche 9 - 14,
**dadurch gekennzeichnet,**
**daß** die oberen und unteren Schwenkhebel (45, 46; 52, 53) jeweils paarweise vorhanden und im Querabstand voneinander angeordnet sind.

16. Kopfstütze nach Anspruch 1,
**dadurch gekennzeichnet,**
**daß** die Schwenkvorrichtung (20) mindestens ein Paar scherenartig miteinander gelenkig verbundener Hebel (62), (63) aufweist, von denen einer endseitig einerseits am Halteelement (16) und andererseits am Polsterträger (17) angelenkt und der andere endseitig über je eine Kulissenführung (64, 65) einerseits mit dem Halteelement (16) und andererseits mit dem Polsterträger (17) gekoppelt ist.

17. Kopfstütze nach Anspruch 16,
**dadurch gekennzeichnet,**
**daß** zwei Hebelpaare (62, 63) vorgesehen sind, die im Querabstand voneinander angeordnet sind.
